# FASCICULE DE BREVET EUROPEEN

(11) **EP 0 971 111 B1**
(45) Date de publication et mention de la délivrance du brevet: **22.12.2004**
(21) Numéro de dépôt: 99401707.7
(22) Date de dépôt: 08.07.1999
(51) Int. Cl.: F02C 7/052, F02C 7/20

(54) **Pièges à particules pour turbomachine**
Partikelfalle für Turbomaschinen
Particle trap for a turbomachine

(30) Priorité: 09.07.1998 FR 9808800
(43) Date de publication de la demande: 12.01.2000
(73) Titulaire: Snecma Moteurs, 75015 Paris (FR)
(72) Inventeur: Cousin, Antoine Emmanuel, 31240 l'Union (FR); Mazeaud, Georges, 91330 Yerres (FR)

(56) Documents cités:
- EP-A- 0 330 782
- FR-A- 2 356 819
- FR-A- 2 536 789

## Description

L'invention concerne une turbomachine comportant un piège à particules.

Les pièges statiques à particules sont construits de façon très diverses, mais ils fonctionnent tous en exploitant l'inertie des particules charriées par l'air entrant dans la turbomachine. Il faut détourner ces particules de l'écoulement avant qu'elles n'atteignent les compresseurs, dont elles pourraient endommager les aubes : on impose une inflexion de la direction de la veine devant l'entrée du piège, et les particules, continuant de suivre la même direction, entrent dans le piège en quittant l'écoulement dévié.

Le but de l'invention est de disposer le piège dans un endroit favorable, de façon qu'il n'accroisse pas sensiblement le volume extérieur de l'élément de la turbomachine auquel il est intégré et ne contraigne pas à l'excès la disposition des équipements dans la machine.

Le piège est plus précisément intégré dans l'entrée d'air du générateur de gaz, comprenant un carter porteur d'un réducteur entraînant un rotor porteur de l'hélice ; ce carter intégrant le piège à particules est porteur des organes de suspension, tels que des bielles, du carter et du rotor porte-hélice.

Le piège à particules intégré au carter est situé dans une zone qui doit résister aux efforts induits par l'hélice, le générateur de gaz et le poids de l'ensemble et transmettre ces efforts, ce qui est inattendu de la part d'un élément en forme de chambre, donc vide pour l'essentiel et qui n'est généralement délimité que par de minces parois. Les pièges à particules connus sont au contraire normalement disposés dans des zones « mortes » de la machine, c'est-à-dire qui ne sont pas soumises à des efforts importants, et la plupart d'entre eux le sont dans le carter de stator, autour de la veine d'écoulement.

On connaît en outre par FR-A-2 356 819 une entrée d'air de turbine à gaz comportant un séparateur de particules constitué d'un capteur en forme de V formant des poches à son sommet reliant des bras creux radiaux où les particules sont aspirées et d'un capteur en position radialement externe.

Le piège proposé ici est délimité à l'arrière par un flasque circulaire portant les moyens de liaison des organes de suspension à la structure environnante et sa chambre est divisée par des bras de suspension s'étendant vers l'avant et vers l'axe du rotor depuis le flasque. Ces bras assurent la résistance du piège et la transmission des efforts de suspensions et sont absents des pièges usuels. Enfin, l'entretien d'un tel piège à particules est facile : il suffit de percer l'enveloppe qui le délimite extérieurement par des portes en position radialement externe par rapport aux bras de suspension et à une partie inférieure de la turbomachine pour vider le piège des particules de tout genre qui s'y sont accumulées.

Une disposition favorable de l'invention consiste à munir les bras de suspension d'un perçage à une partie inférieure qu'ils occupent dans la chambre.

L'invention sera décrite plus en détail à l'aide des figures suivantes, qui sont annexées à titre simplement illustratif :
- la figure 1 est une vue générale de l'avant d'une turbomachine et de l'invention,
- la figure 2 est une vue générale de l'invention,
- et les figures 3, 4 et 5 illustrent une partie du piège selon l'invention, vue de l'arrière, de côté et de l'extérieur selon les sections III-III, IV-IV et V-V des figures 5, 3 et 4 respectivement.

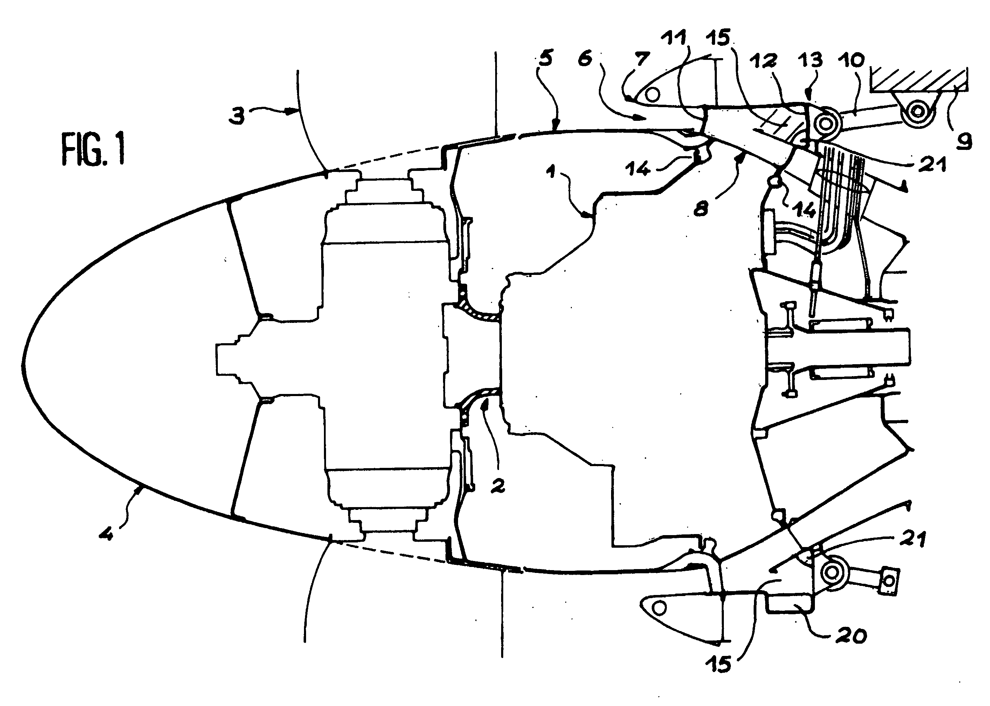

Le cône d'entrée d'un turbopropulseur d'avion est plus précisément dessiné sur la figure 1 ; ce cône comprend un carter de réducteur 1 porteur d'équipements variés et d'un rotor soutenant l'extrémité de l'arbre d'hélice 2 qui entraîne l'hélice 3 et le cône avant 4.

Le cône d'entrée comprend encore une enveloppe 5 qui prolonge le cône 4 par l'arrière et délimite par l'intérieur une veine primaire 6 annulaire d'écoulement par laquelle l'air accéléré par les pales de l'hélice 3 entre dans la machine et traverse les compresseurs et les turbines (non représentés). La veine primaire 6 est entourée par un bec 7 qui canalise le débit d'air.

Le carter 1 est suspendu à la structure 9 de l'avion par trois bielles 10.

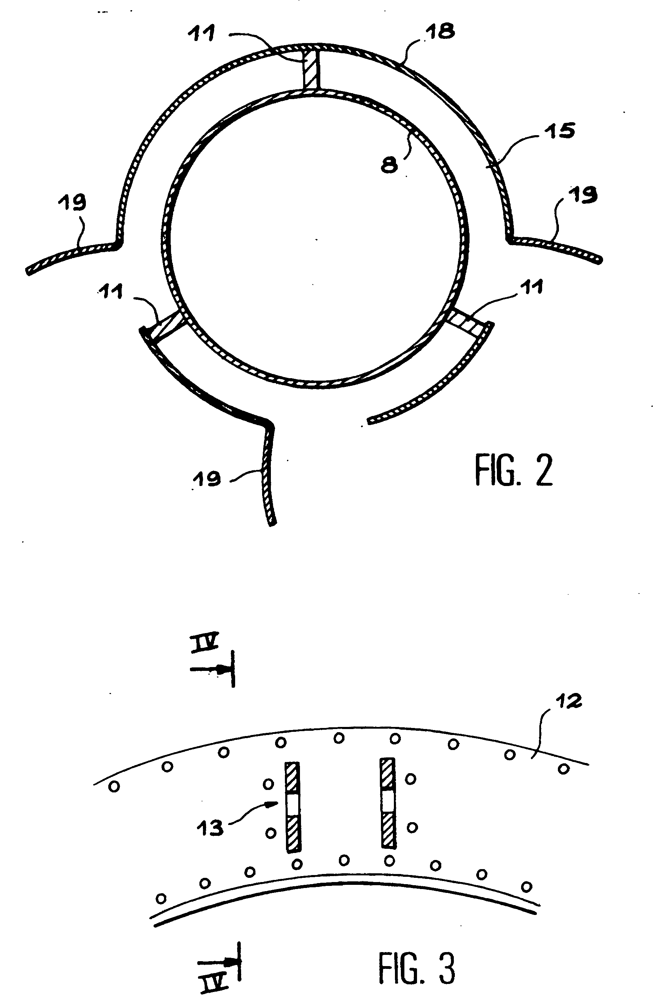

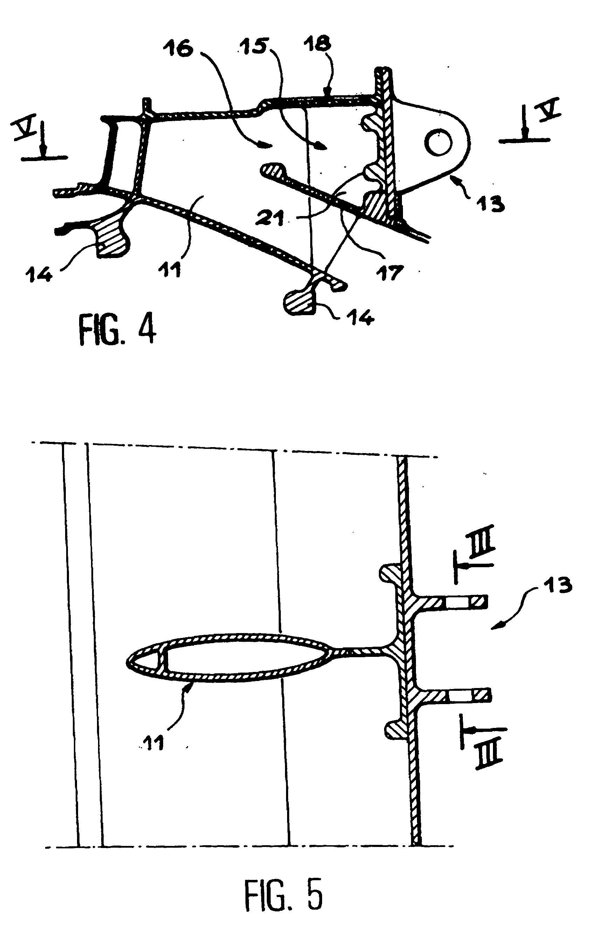

Des bras de suspension 11 (voir aussi les figures 2 et 4), également au nombre de trois, sont vissés au flasque 12 en face des chapes 13 et des bielles 10, et s'étendent vers l'avant de la machine et vers l'intérieur, c'est-à-dire vers l'axe de rotation de l'arbre 2, jusqu'au carter de réducteur 1, auquel ils sont vissés par des brides 14.

Le piège à particules 15 est en forme de chambre annulaire ; il est délimité à l'arrière par le flasque 12, à l'avant par une entrée 16 prolongeant la veine primaire 6, à l'intérieur par un bec de séparation 17 qui le sépare d'une portion convergente de la veine primaire 8 menant aux compresseurs et à l'extérieur par une enveloppe 18. Le piège à particules 15 fonctionne comme les autres, c'est-à-dire qu'il reçoit les particules de toute nature aspirées accidentellement par la machine et qui y sont projetées par inertie en quittant le flux d'air, qui continue de parcourir la veine primaire 6. On voit cependant qu'il est divisé par une partie des bras de suspension 11 : comme on le voit encore mieux à la figure 2, un bras de suspension 11 est au sommet et les deux autres s'étendent latéralement, au-dessous de l'horizontale, de sorte que la chambre annulaire de piège 15 est divisée en deux secteurs angulaires latéraux et un secteur angulaire inférieur. La mise en prolongement des bielles 10 et des bras de suspension 11 permet de suspendre le carter de réducteur 1 à la structure 9.

La présence des bras de suspension 11 ne contrarie pas l'entrée des particules, mais l'entretien de la machine impose de vider le piège 15. C'est pourquoi on prévoit de percer la cloison extérieure 18 de portes 19, une pour chaque secteur de la chambre : deux de ces portes, s'ouvrant sur les secteurs latéraux, s'étendent juste au-dessus des bras de suspension 11 latéraux, et la troisième porte 19, s'ouvrant au fond de la cloison extérieure 18, permet d'accéder au secteur inférieur ; le contenu du piège 15 tombe à l'extérieur dès que les portes 19 sont ouvertes.

Mais comme il peut être avantageux de favoriser l'accumulation au moins partielle des particules au fond du piège, en zone 20, malgré les bras de suspension 11, on prévoit que ceux-ci ne divisent pas complètement la chambre annulaire du piège 15 mais comprennent un perçage au bas de leur région d'extension dans le piège 15 pour laisser au moins les plus fines particules captées tomber dans le secteur inférieur de la chambre. Un de ces perçages porte la référence 21 sur les figures 1 et 4.

S'il existe un bras 11 juste au sommet du piège 15, comme dans la réalisation décrite, il serait avantageux qu'il soit percé comme les autres bien que les particules ne puissent pas s'accumuler sur lui, ceci pour éviter de manier deux modèles différents.

## Revendications

1. Turbomachine comportant un piège à particules (15) intégré à un carter d'entrée (1), le carter étant suspendu à une structure environnante (9) par des organes de suspension (10) et des bras de suspension (11) et portant un rotor (2) par l'intermédiaire d'un réducteur, le piège étant en forme de chambre annulaire délimitée par une enveloppe extérieure (18) et s'ouvrant à l'avant sur une veine d'écoulement d'air (6) qui s'infléchit devant le piège (15), **caractérisée en ce que** le piège est délimité à l'arrière par un flasque (12) circulaire portant des moyens de liaison (13) des organes de suspension (10), que la chambre est divisée par les bras de suspension (11) s'étendant vers l'avant et vers un axe du rotor (2) depuis le flasque (12), en face des moyens de liaison et des organes de suspension, jusqu'au carter (1) portant le rotor (2), et que l'enveloppe extérieure (18) est percée de portes (19) situées d'une part en position radialement externe par rapport aux bras de suspension (11) et, d'autre part, à une position inférieure de la turbomachine.

2. Turbomachine selon la revendication 1, **caractérisée en ce que** certains des bras de suspension (11) sont munis d'un perçage (21) à une partie inférieure dans la chambre.

3. Turbomachine selon l'une quelconque des revendications 1 ou 2, **caractérisée en ce que** les bras de suspension (11) prolongent les organes de suspension (10).

## Patentansprüche

1. Turbotriebwerk mit einer Partikelfalle (15), die in ein Eintrittgehäuse (1) eingebaut ist,
wobei das Gehäuse an einem umgebenden Aufbau (9) durch Aufhängorgane (10) und Aufhängarme (11) aufgehängt ist und über eine Untersetzung einen Rotor (2) trägt, wobei die Partikelfalle als ringförmige Kammer ausgebildet ist, die von einem Außenmantel (18) umgrenzt wlrd und sich vom in eine Primärströmungsbahn (6) öffnet, die vor der Falle (15) gekrümmt ist,
**dadurch gekennzeichnet,**
**dass** die Falle hinten durch einen kreisförmigen Flansch (12) abgegrenzt ist, an dem Verbindungsmittel (13) der Aufhängorgane (10) sitzen, dass die Kammer durch die Aufhängarme (11) unterteilt ist, die sich gegenüber den Verbindungsmitteln und den Aufhängorganen von dem Flansch (12) aus nach vorn und zu einer Achse des Rotors (2) hin bis zu dem Gehäuse (1) erstrecken, das den Rotor (2) trägt, und dass in dem Außenmantel (18) Klappen (19) vorgesehen sind, die sich einerseits radial außerhalb der Aufhängarme (11) und andererseits in einer unteren Position des Turbotriebwerks befinden.

2. Turbotriebwerk nach Anspruch 1,
**dadurch gekennzeichnet,**
**dass** manche der Aufhängarme (11) in einem unteren Teil in der Kammer mit einer durchgehenden Bohrung (21) versehen sind.

3. Turbotriebwerk nach einem der Ansprüche 1 oder 2,
**dadurch gekennzeichnet,**
**dass** die Aufhängarme (11) sich in der Verlängerung der Aufhängorgane (10) befinden.

## Claims

1. Turboshaft engine comprising a particles trap (15) integrated with an intake casing (1), the casing being suspended from a surrounding structure (9) by suspension devices (10) and suspension arms (11) and carrying a rotor (2) by the intermediary of a reduction gear, the trap being in the form of an annular chamber delimited by an external envelope (18) and opening at the front onto an airflow stream (6) which is inflected in front of the trap (15), **characterized in that** the trap is delimited at the rear by a circular flange (12) carrying means (13) of connecting the suspension devices (10), **in that** the chamber is divided by the suspension arms (11) extending forwards and towards an axis of the rotor (2) from the flange (12), facing the connecting means and the suspension devices, as far as the casing (1) carrying the rotor (2) and **in that** the external envelope (18) is pierced with doors (19) situated on the one hand in a radially external position with respect to the suspension arms (11) and, on the other hand, at a lower position in the turboshaft engine.

2. Turboshaft engine according to Claim 1, **characterized in that** certain of the suspension arms (11) are provided with a piercing (21) in a lower part in the chamber.

3. Turboshaft engine according to either one of Claims 1 or 2, **characterized in that** the suspension arms (11) extend the suspension devices (10).
